# FASCICULE DE BREVET EUROPEEN

(11) **EP 4 240 606 B1**
(45) Date de publication et mention de la délivrance du brevet: **04.12.2024**
(21) Numéro de dépôt: 21783530.5
(22) Date de dépôt: 30.09.2021
(51) Int. Cl.: B60K 11/02, B60H 1/00

(54) **MODULE DE REFROIDISSEMENT POUR VÉHICULE AUTOMOBILE ÉLECTRIQUE OU HYBRIDE À TURBOMACHINE TANGENTIELLE AVEC ÉCHANGEUR THERMIQUE SUPPLÉMENTAIRE**
KÜHLMODUL FÜR EIN ELEKTRO- ODER HYBRIDKRAFTFAHRZEUG MIT EINER TANGENTIALFLUSSTURBOMASCHINE MIT EINEM ZUSÄTZLICHEN WÄRMETAUSCHER
COOLING MODULE FOR AN ELECTRIC OR HYBRID MOTOR VEHICLE, HAVING A TANGENTIAL-FLOW TURBOMACHINE WITH AN ADDITIONAL HEAT EXCHANGER

(30) Priorité: 04.11.2020 FR 2011329
(43) Date de publication de la demande: 13.09.2023
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); AZZOUZ, Kamel, 78322 Le Mesnil-Saint-Denis Cedex (FR); DURBECQ, Gael, 78322 Le Mesnil-Saint-Denis Cedex (FR); ETIENNE, Erwan, 78322 Le Mesnil-Saint-Denis Cedex (FR)
(74) Mandataire: Valeo Systèmes Thermiques
(86) Numéro de dépôt international: PCT/EP2021/076991
(87) Numéro de publication internationale: WO 2022/096204

(56) Documents cités:
- EP-A1- 1 715 157
- WO-A1-2018/189449
- JP-A- H11 321 346
- JP-A- H11 321 347

## Description

La présente invention se rapporte à un module de refroidissement pour véhicule automobile électrique ou hybride, à turbomachine tangentielle.

Un module de refroidissement d'un type connu est divulgué par le document JP H11 321346 A.

Un module de refroidissement (ou module d'échange de chaleur) d'un véhicule automobile comporte classiquement au moins un échangeur thermique et un dispositif de ventilation adapté à générer un flux d'air traversant le ou les échangeurs thermiques. Le dispositif de ventilation permet ainsi, par exemple, de générer un flux d'air au contact de l'échangeur chaleur, à l'arrêt du véhicule ou à faible vitesse de roulage. Ce dispositif de ventilation se présente par exemple sous la forme d'une turbomachine tangentielle. Le flux d'air est admis dans l'enceinte du module de refroidissement via une ouverture d'aspiration et il est refoulé par une ouverture d'évacuation.

Classiquement, l'échangeur thermique est placé en regard d'au moins deux baies de refroidissement, formées dans la face avant de la carrosserie du véhicule automobile. Une première baie de refroidissement est située au-dessus du pare-chocs tandis qu'une deuxième baie est située au-dessous du pare-chocs. Une telle configuration est préférée, car le moteur thermique doit également être alimenté en air, l'admission d'air du moteur étant classiquement situé dans le passage du flux d'air traversant la baie de refroidissement supérieure.

Cependant, les véhicules électriques sont de préférence munis uniquement de baies de refroidissement situées sous le pare-chocs, de préférence encore d'une unique baie de refroidissement située sous le pare-chocs. En effet, le moteur électrique n'a pas besoin d'être alimenté en air. La diminution du nombre de baies de refroidissement permet par ailleurs d'améliorer les caractéristiques aérodynamiques du véhicule électrique. Ceci se traduit également par une meilleure autonomie et une plus grande vitesse de pointe du véhicule automobile.

Cependant, cela entraîne que la place disponible pour y disposer le module de refroidissement est réduite. La place consacrée aux échangeurs thermiques est donc limitée et par conséquent la surface totale d'échange est également réduite. Cela conduit ainsi à une baisse de la capacité d'échange thermique au niveau du module de refroidissement et donc des performances réduites par exemple pour les circuits de climatisation ou de gestion thermique des batteries et autres éléments.

Il convient donc de privilégier une conception compacte du module de refroidissement et d'optimiser l'architecture du ou des circuits de gestion thermique au sein duquel ou desquels est/sont exploité(s) le au moins un échangeur thermique agencé au sein du module de refroidissement.

Un but de l'invention est de proposer un module de refroidissement pour véhicule automobile électrique permettant un meilleur agencement des composants au sein de l'espace disponible.

À cet effet, l'invention a pour objet un module de refroidissement pour véhicule automobile à moteur électrique ou hybride, le module de refroidissement comprenant au moins un échangeur thermique, au moins une turbomachine tangentielle présentant un axe de rotation, la turbomachine tangentielle étant apte à créer un flux d'air circulant entre une ouverture d'aspiration et une ouverture d'évacuation en traversant le au moins un échangeur thermique, le module de refroidissement comprenant également au moins un boîtier configuré pour loger le au moins un échangeur thermique et ladite au moins une turbomachine tangentielle, le module de refroidissement comprenant en outre un échangeur thermique supplémentaire destiné à être traversé par le flux d'air et disposé à l'extérieur du au moins un boîtier, en aval de l'ouverture d'évacuation du module de refroidissement selon une direction longitudinale du module de refroidissement.

Un tel module de refroidissement permet d'optimiser l'espace disponible tout en assurant un échange thermique entre le flux d'air refoulé par l'ouverture d'évacuation et l'échangeur thermique supplémentaire. Placer l'échangeur thermique supplémentaire à l'extérieur du boîtier permet d'exploiter un volume mort potentiellement présent en regard de l'ouverture d'évacuation, ce qui permet également de limiter l'encombrement du module de refroidissement.

Par ailleurs, cet agencement compact peut amener une plus grande liberté en termes d'architecture du module de refroidissement.

L'invention peut en outre comprendre un ou plusieurs des aspects suivants pris seuls ou en combinaison :
- l'échangeur thermique supplémentaire est agencé dans un circuit de refroidissement comprenant dans le sens de circulation d'un fluide réfrigérant destiné à circuler au sein de ce circuit de refroidissement : un compresseur, un condenseur, un premier détendeur et un premier évaporateur, l'échangeur thermique supplémentaire étant disposé dans ledit circuit de refroidissement en aval du compresseur et en amont du condenseur ;
- le premier évaporateur du circuit de refroidissement est une interface de gestion thermique configurée pour échanger de la chaleur avec les batteries du véhicule automobile ;
- le circuit de refroidissement comporte un deuxième détendeur et un deuxième évaporateur disposés en parallèle du premier détendeur et du premier évaporateur, le deuxième évaporateur étant destiné à être traversé par un flux d'air interne ;
- l'échangeur thermique supplémentaire présente une forme parallélépipédique comportant une longueur, une hauteur et une largeur ;
- la longueur de l'échangeur thermique supplémentaire est inférieure ou égale à la largeur du module de refroidissement ;
- le module de refroidissement comprend au moins une paroi additionnelle reliant un bord de l'ouverture d'évacuation à un flanc de l'échangeur thermique supplémentaire ;
- la paroi additionnelle est une pièce annexée au bord de l'ouverture d'évacuation ;
- la largeur de l'échangeur thermique supplémentaire est inférieure ou égale à un écartement entre la paroi additionnelle et un bord inférieur du module de refroidissement ;
- l'échangeur thermique supplémentaire est placé selon un plan général parallèle à la direction longitudinale du module de refroidissement ; et
- l'échangeur thermique supplémentaire est placé selon un plan général parallèle au plan de l'ouverture d'évacuation.

D'autres avantages et caractéristiques de l'invention apparaîtront plus clairement à la lecture de la description suivante donnée à titre d'exemple illustratif et non limitatif, et des dessins annexés parmi lesquels :
[Fig.1] La figure 1 représente schématiquement la partie avant d'un véhicule automobile à moteur électrique ou hybride, vu de côté ;
[Fig. 2] La figure 2 représente une vue en perspective et en coupe partielle d'une face avant de véhicule automobile comprenant un module de refroidissement ;
[Fig. 3] La figure 3 représente une vue en coupe du module de refroidissement de la Figure 2 ;
[Fig. 4] La figure 4 représente une vue en perspective de l'échangeur thermique supplémentaire ;
[Fig. 5] La figure 5 montre une représentation schématique d'un circuit de gestion thermique au sein duquel est agencé l'échangeur thermique supplémentaire ; et
[Fig. 6] La figure 6 montre une représentation schématique d'une variante du circuit de gestion thermique de la Figure 5.

Sur ces figures, les éléments identiques portent les mêmes numéros de référence.

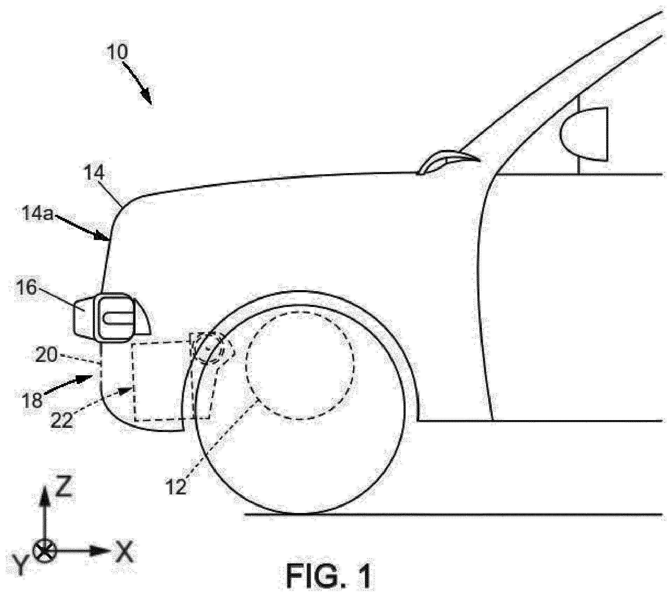

Sur les figures 1 à 4 est représenté un trièdre XYZ afin de définir l'orientation des différents éléments les uns des autres. Une première direction, notée X, correspond à une direction longitudinale du véhicule. Elle correspond également à une direction inverse à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

Dans la présente description, on entend par « haut » ou « haute » et « bas » ou « basse » la position d'un élément par rapport à un autre selon la direction Z déterminée ci-dessus. Un élément dit « haut » sera plus proche du toit du véhicule et un élément dit « bas » sera plus proche du sol.

La figure 1 illustre de manière schématique la partie avant d'un véhicule automobile 10 à moteur 12 électrique ou hybride. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

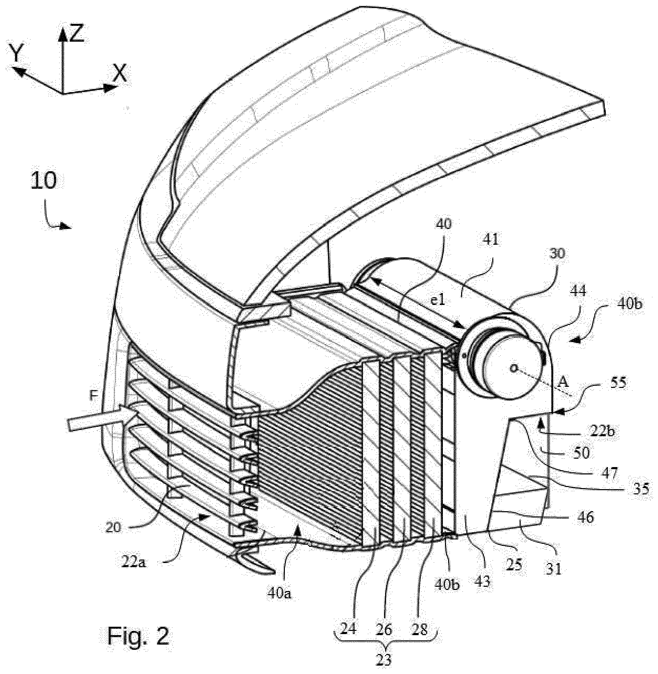

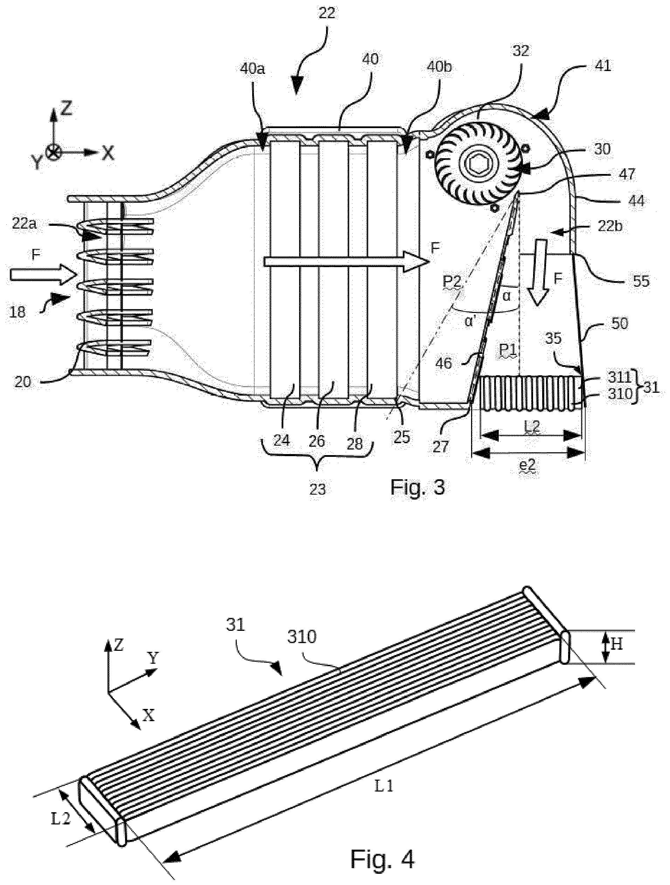

Comme le montrent les figures 2 et 3, le module de refroidissement 22 présente une forme générale parallélépipédique déterminée par une longueur, une largeur et une hauteur. La longueur s'étend le long de la direction X, la largeur le long de la direction Y et la hauteur dans la direction Z.

Le module de refroidissement 22 est destiné à être traversé par un flux d'air F parallèle à la direction X et allant de l'avant vers l'arrière du véhicule 10. Cette direction X correspond plus particulièrement à l'axe longitudinal du module de refroidissement 22. Dans la présente demande, on qualifie un élément d'en « amont » ou d'en « aval » selon la direction longitudinale X du module de refroidissement, un élément qui est respectivement disposé plus vers l'avant ou vers l'arrière qu'un autre élément. L'avant correspond à l'avant du véhicule automobile 10 à l'état monté ou alors la face du module de refroidissement 22 par laquelle le flux d'air F est destiné à entrer dans le module de refroidissement 22. L'arrière correspond quant à lui à l'arrière du véhicule automobile 10 ou alors à la face du module de refroidissement 22 par laquelle le flux d'air F est destiné à ressortir du module de refroidissement 22.

Le module de refroidissement 22 comporte essentiellement un boîtier ou carénage 40 formant un canal interne entre une extrémité amont 40a et une extrémité aval 40b opposées l'une à l'autre. L'extrémité amont 40a est plus particulièrement équipée d'une ouverture d'aspiration 22a. À l'intérieur dudit carénage 40 est disposé au moins un échangeur thermique 24, 26, 28. Ce canal interne est de préférence orienté parallèlement à la direction X de sorte que l'extrémité amont 40a est orientée vers l'avant du véhicule 10 en regard de la baie de refroidissement 18 et de sorte que l'extrémité aval 40b est orientée vers l'arrière du véhicule 10. Sur les figures 2 et 3, le module de refroidissement 22 comprend trois échangeurs thermiques 24, 26, 28 regroupés au sein d'un ensemble d'échangeurs thermiques 23. Il pourrait toutefois comporter plus ou moins d'échangeurs thermiques suivant la configuration souhaitée.

Sur l'exemple des Figures 2 et 3, le deuxième échangeur thermique 26 est disposé en aval du premier échangeur thermique 24 tandis que le troisième échangeur thermique 28 est disposé en aval du deuxième échangeur thermique 26. D'autres configurations peuvent néanmoins être envisageables comme par exemple les deuxième 26 et troisième 28 échangeurs thermiques disposés tous deux en amont du premier échangeur thermique 24 ou encore de part et d'autre du premier échangeur thermique 24.

Sur ces mêmes figures, chacun des échangeurs thermiques 24, 26, 28 présente une forme générale parallélépipédique déterminée par une longueur, une épaisseur et une hauteur. La longueur s'étend le long de la direction Y, l'épaisseur le long de la direction X et la hauteur dans la direction Z. Les échangeurs thermiques 24, 26, 28 s'entendent alors selon un plan général parallèle à la direction verticale Z et la direction latérale Y. Ce plan général est de préférence perpendiculaire au sens de circulation du flux d'air F traversant lesdits échangeurs thermiques 24, 26, 28 afin de maximiser l'échange thermique.

Le module de refroidissement 22 comporte également un deuxième boîtier 41 appelé « boîtier collecteur » dans la suite de cette description. Ce boîtier collecteur 41 est disposé en aval du carénage 40 et de l'ensemble d'échangeurs thermiques 23 selon la direction longitudinale X du module de refroidissement 22. Plus précisément, le boîtier collecteur 41 est disposé au niveau de l'extrémité avale 40b du carénage 40. Ce boîtier collecteur 41 permet ainsi de récupérer le flux d'air F traversant l'ensemble d'échangeurs thermiques 23 et d'orienter ce flux d'air F vers l'ouverture d'évacuation 22b. Le boîtier collecteur 41 peut venir de matière avec le carénage 40 ou bien être une pièce rapportée fixée à l'extrémité aval dudit carénage 40.

Le module de refroidissement 22, plus précisément le boîtier collecteur 41 comprend également au moins un ventilateur tangentiel, aussi nommé turbomachine tangentielle 30 configuré pour générer le flux d'air F destiné à traverser l'ensemble d'échangeurs thermiques 23 depuis l'ouverture d'aspiration 22a jusqu'à l'ouverture d'évacuation 22b. La turbomachine tangentielle 30 comprend un rotor ou turbine 32 (ou hélice tangentielle) qui a notamment une forme sensiblement cylindrique. La turbine 32 comporte avantageusement plusieurs étages de pales (ou aubes), visibles sur la figure 3. La turbine 32 est montée rotative autour d'un axe de rotation A. Avantageusement, cet axe de rotation A est orienté sensiblement parallèle à la direction latérale Y. Le diamètre de la turbine 32 est par exemple compris entre 35 mm et 200 mm pour limiter sa taille. La turbomachine tangentielle 30 est ainsi compacte.

La turbomachine tangentielle 30 est disposée dans le boîtier collecteur 41 de telle sorte que les parois latérales 43 du boîtier collecteur 41 sont sensiblement perpendiculaires à l'axe de rotation A de la turbine 32, comme illustré plus particulièrement sur la Figure 2. La turbomachine tangentielle 30 est configurée pour aspirer de l'air afin de générer le flux d'air F traversant l'ensemble d'échangeurs thermiques 23. La turbomachine tangentielle 30 comporte plus précisément une volute 44 formée par le premier boîtier collecteur 41 et au centre de laquelle est disposée la turbine 32. L'ouverture d'évacuation 22b correspond à l'extrémité libre de la volute 44 formée par le du premier boîtier collecteur 41, comme illustré plus particulièrement sur la Figure 3.

Dans l'exemple illustré aux figures 2 et 3, la turbomachine tangentielle 30 est dans une position haute, notamment dans le tiers supérieur du boîtier collecteur 41, de manière préférée dans le quart supérieur du boîtier collecteur 41. Ceci permet notamment de protéger la turbomachine tangentielle 30 en cas de submersion et/ou de limiter l'encombrement du module de refroidissement 22 dans sa partie inférieure. Dans ce cas de figure, l'ouverture d'évacuation 22b du flux d'air F est préférentiellement orientée vers la partie basse du module de refroidissement 22.

Afin de guider l'air en sortie de l'ensemble d'échangeurs thermiques 23 vers l'ouverture d'évacuation 22b, le boîtier collecteur 41 comporte, en regard dudit ensemble d'échangeurs thermiques 23, une paroi de guidage 46. Cette paroi de guidage 46 fait plus particulièrement la jonction avec un bord amont 47 de l'ouverture d'évacuation 22b. Par bord amont 47, on entend ici le bord de l'ouverture d'évacuation 22b le plus proche de l'extrémité aval 40b du carénage 40.

La paroi de guidage 46 forme un angle α avec un premier plan P1 perpendiculaire à la direction longitudinale X du module de refroidissement 22, ceci est plus particulièrement illustré sur la Figure 3. Le fait que la paroi de guidage 46 forme un angle α compris entre 0° et 25° permet une meilleure circulation du flux d'air F au sein du boîtier collecteur 41 et limite la perte des charges. De préférence, la paroi de guidage 46 est inclinée et l'angle α est compris entre 5 et 25°, de préférence 23° par rapport au premier plan P1. Plus généralement, cet angle α est compris entre 0° et un angle maximal de 25°. Si l'angle α est de 0° alors la paroi de guidage 46 est confondue avec le premier plan P1. L'angle maximal de 25° correspond quant à lui à l'angle α' d'un deuxième plan d'inclinaison maximale P2 (visible sur la figure 3) avec le premier plan P1.

Ce deuxième plan d'inclinaison maximale P2 relie plus précisément le bord amont 47 de l'ouverture d'évacuation 22b et un bord d'extrémité aval 25 de l'au moins un échangeur thermique 24, 26, 28. Par bord d'extrémité aval 25, on entend ici le bord d'un échangeur thermique 24, 26, 28 le plus proche de l'extrémité aval 40b du carénage 40. Lorsque le carénage 40 comporte plusieurs échangeurs thermiques 24, 26, 28, le bord d'extrémité aval 25 pris en considération est le bord d'extrémité aval 25 de l'échangeur thermique le plus en aval, ici le troisième échangeur thermique 28. Le bord d'extrémité aval 25 est disposé en regard de l'ouverture d'évacuation 22b. Par là, on entend que, comme illustré sur la figure 3, si l'ouverture d'évacuation 22b est orientée vers la partie basse du module de refroidissement 22, le bord d'extrémité aval 25 est un bord d'extrémité bas de l'échangeur thermique 28. A contrario, si l'ouverture d'évacuation 22b est orientée vers la partie haute du module de refroidissement 22, le bord d'extrémité aval 25 sera un bord d'extrémité haut de l'échangeur thermique 28.

Comme le montrent les figures 2 et 3, le module de refroidissement 22 comporte en outre un échangeur thermique supplémentaire 31 destiné à être traversé par le flux d'air F. Cet échangeur thermique supplémentaire 31 est disposé à l'extérieur du carénage 40 et du boîtier collecteur 41, en aval de l'ouverture d'évacuation 22b du module de refroidissement 22. Plus particulièrement, l'échangeur thermique supplémentaire 31 se situe notamment en regard de l'ouverture d'évacuation 22b et face à la paroi de guidage 46. Cet échangeur thermique supplémentaire 31 est ainsi disposé dans un volume mort du module de refroidissement 22. Avantageusement, l'ajout de l'échangeur thermique supplémentaire 31 n'augmente pas le volume occupé par le module de refroidissement 22 au sein du véhicule automobile 10.

Selon le mode de réalisation illustré à la figure 3, l'échangeur thermique supplémentaire 31 est disposé selon un plan général parallèle au plan de l'ouverture d'évacuation 22b, de sorte que l'échangeur thermique supplémentaire 31 soit disposé perpendiculairement au flux d'air F évacué par l'ouverture d'évacuation 22b. En se référant au système d'axes X, Y, Z, le flux d'air F est destiné à être évacué selon une direction orientée suivant la direction Z et la surface d'échange de l'échangeur thermique supplémentaire 31 s'étend dans un plan parallèle à la direction longitudinale X du module de refroidissement 22.

Dans le cas particulier où l'axe Z est confondu avec la direction verticale, il convient de préciser que le flux d'air F destiné à être refoulé par l'ouverture d'évacuation 22b s'écoule verticalement. L'échangeur thermique supplémentaire 31 est alors placé horizontalement. Ainsi, l'orientation de l'échangeur thermique supplémentaire 31 situé en regard de l'ouverture d'évacuation 22b du boîtier collecteur 41 diffère de celle de la pluralité d'échangeurs thermiques 24, 26, 28 agencés à l'intérieur du boîtier 40 du module de refroidissement 22.

Selon un mode de réalisation de l'échangeur thermique supplémentaire 31, celui-ci comporte un faisceau de tubes plats 310 empilés les uns sur les autres et séparés par des intercalaires 311, comme illustré plus particulièrement sur la Figure 3. Les tubes plats 310 et les intercalaires 311 de l'échangeur thermique supplémentaire 31 peuvent être parallèles les uns aux autres. Les tubes plats 310 et les intercalaires 311 sont disposés perpendiculairement au plan général de l'échangeur thermique supplémentaire 31. De ce fait, les tubes plats 310 et les intercalaires 311 sont empilés suivant la direction longitudinale X du module de refroidissement 22. Dans le cas du mode de réalisation illustré sur la Figure 3, les tubes plats 310 sont orientés verticalement, ceci permet de maximiser l'échange de chaleur entre le flux d'air F et l'échangeur thermique supplémentaire 31.

Dans le but de limiter les pertes, le module de refroidissement 22 peut comprendre au moins une paroi additionnelle 50 reliant un bord 55 de l'ouverture d'évacuation 22b à un flanc de l'échangeur thermique supplémentaire 31, comme illustré sur les Figures 2 et 3.

La paroi additionnelle 50 est par exemple une plaque plane et rigide qui permet de diriger le flux d'air F refoulé par l'ouverture d'évacuation 22b vers l'échangeur thermique supplémentaire 31. Elle peut notamment être disposée sur le bord 55 du boîtier collecteur 41 pour former un prolongement de l'ouverture d'évacuation 22b. La paroi additionnelle 50 est ainsi disposée en regard de la paroi de guidage 46. Selon un autre mode de réalisation non illustré sur les figures, la paroi additionnelle 50 peut comporter deux prolongations latérales rejoignant la paroi de guidage 46 de manière à former un conduit de prolongation de l'ouverture d'évacuation 22b. Un tel conduit de prolongation permet notamment de guider le flux d'air F refoulé par l'ouverture d'évacuation 22b vers l'échangeur thermique supplémentaire 31 en limitant les divergences du flux d'air F de manière à ce que l'intégralité du flux d'air F traverse l'échangeur thermique supplémentaire 31. Ce mode de réalisation particulier de la paroi additionnelle 50 permet également de limiter les éventuelles vibrations engendrées par le fonctionnement de la turbomachine tangentielle 30.

La paroi additionnelle 50 peut notamment prendre la forme d'une pièce annexée au bord 55 de l'ouverture d'évacuation 22b, ceci permet de remplacer cette paroi additionnelle 50 plus aisément si nécessaire. Suivant une variante, la paroi additionnelle 50 peut venir de matière avec le boîtier collecteur 41, cette variante permet de s'affranchir d'un moyen de liaison entre la paroi additionnelle 50 et le boîtier collecteur 41 du module de refroidissement 22.

Les dimensions de l'échangeur thermique supplémentaire 31 sont intrinsèquement liées à la largeur du module de refroidissement 22, à la forme de l'ouverture d'évacuation 22b du boîtier collecteur 41 et à l'étendue de la paroi additionnelle 50. Selon un mode de fabrication de l'échangeur thermique supplémentaire 31, celui-ci présente une forme parallélépipédique comportant une longueur L1, une hauteur H et une largeur L2, comme illustré plus particulièrement sur la Figure 4. Le volume de l'échangeur thermique supplémentaire 31 peut être inférieur au volume de l'un des échangeurs thermiques 24, 26 ou 28 pris individuellement, comme illustré par exemple sur les Figures 2 et 3.

En particulier, la longueur L1 de l'échangeur thermique supplémentaire 31 est notamment inférieure ou égale à la largeur du module de refroidissement 22. La largeur du module de refroidissement 22 peut dans ce cas désigner plus particulièrement la largeur du boîtier collecteur 41. Celle-ci peut notamment désigner l'écartement e1 entre deux parois latérales 43 du boîtier collecteur 41, cet écartement e1 est plus particulièrement illustré sur la Figure 2. La largeur L2 de l'échangeur thermique supplémentaire 31 est inférieure ou égale à un écartement e2 entre la paroi additionnelle 50 et un bord inférieur 27 du module de refroidissement 22, ceci est plus particulièrement illustré sur la Figure 3. Sur les Figures 2 et 3, la paroi additionnelle 50 repose sur un bord haut 35 de l'échangeur thermique supplémentaire 31. De telles dimensions permettent de maximiser l'échange de chaleur entre le flux d'air F refoulé par l'ouverture d'évacuation 22b et l'échangeur thermique supplémentaire 31.

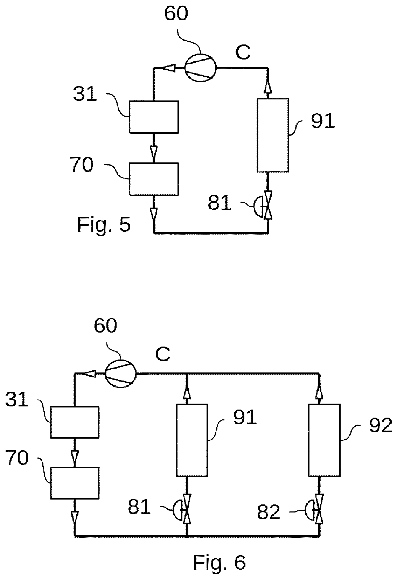

L'échangeur thermique supplémentaire 31 est par exemple agencé dans un circuit de refroidissement C tel que celui schématisé sur la Figure 5. En se référant au sens de circulation du fluide réfrigérant destiné à circuler au sein de ce circuit de refroidissement C, ce dernier comprend un compresseur 60, l'échangeur thermique supplémentaire 31, un condenseur 70, un premier détendeur 81 et un premier évaporateur 91.

Dans la suite de cette description, on entend par « placé en amont » qu'un élément est placé avant un autre par rapport au sens de circulation du fluide réfrigérant. A contrario, on entend par « placé en aval » qu'un élément est placé après un autre par rapport au sens de circulation du fluide réfrigérant.

L'échangeur thermique supplémentaire 31 est donc situé en aval du compresseur 60 et en amont du condenseur 70. Ainsi positionné, l'échangeur thermique supplémentaire 31 permet d'assurer un rôle de désurchauffeur, c'est-à-dire qu'il abaisse la température du fluide réfrigérant issu du compresseur 60 avant son entrée dans le condenseur 70. L'échangeur thermique supplémentaire 31 permet ainsi d'optimiser l'efficacité du condenseur 70 en lui fournissant un fluide réfrigérant dont la température est très proche de la saturation. L'échangeur thermique supplémentaire 31 peut par exemple être connecté au circuit de climatisation.

Selon un premier mode de réalisation du circuit de refroidissement C, le premier évaporateur 91 est une interface de gestion thermique configurée pour échanger de la chaleur avec les batteries du véhicule automobile 10. En effet, afin qu'elles soient les plus efficaces possible, ces batteries doivent rester à une température optimale de fonctionnement. Il est donc nécessaire de les refroidir en utilisation pour éviter un dépassement excessif de cette température optimale de fonctionnement. De même, il peut également être nécessaire de chauffer ces batteries, par exemple par temps froid, afin qu'elles atteignent dans un délai le plus court possible cette température optimale de fonctionnement.

Selon une variante du circuit de refroidissement C illustrée sur la Figure 6, ledit circuit C comporte un deuxième détendeur 82 et un deuxième évaporateur 92 qui sont par exemple disposés en parallèle du premier détendeur 81 et du premier évaporateur 91. Le deuxième évaporateur 92 est par exemple destiné à être traversé par un flux d'air interne, il est notamment configuré pour refroidir un flux d'air destiné à l'habitacle du véhicule automobile 10. Ainsi le deuxième évaporateur 92 peut notamment participer à la climatisation du véhicule automobile 10.

L'invention n'est pas limitée aux exemples de réalisation décrits en regard des figures et d'autres modes de réalisation apparaîtront clairement à l'homme du métier, dans le cadre des revendications. Notamment, les différents exemples peuvent être combinés, tant qu'ils ne sont pas contradictoires.

## Revendications

1. Module de refroidissement (22) pour véhicule automobile (10) à moteur (12) électrique ou hybride, comprenant :
- au moins un échangeur thermique (24, 26, 28)
- au moins une turbomachine tangentielle (30) présentant un axe de rotation (A), la turbomachine tangentielle (30) étant apte à créer un flux d'air (F) circulant entre une ouverture d'aspiration (22a) et une ouverture d'évacuation (22b) en traversant le au moins un échangeur thermique (24, 26, 28) ;
- au moins un boîtier (40, 41) configuré pour loger le au moins un échangeur thermique (24, 26, 28) et ladite au moins une turbomachine tangentielle (30),
le module de refroidissement (22) étant **caractérisé en ce qu'**il comprend un échangeur thermique supplémentaire (31) destiné à être traversé par le flux d'air (F) et disposé à l'extérieur du au moins un boîtier (40, 41), en aval de l'ouverture d'évacuation (22b) du module de refroidissement (22) selon une direction longitudinale (X) du module de refroidissement (22).

2. Module de refroidissement (22) selon la revendication précédente, **caractérisé en ce que** l'échangeur thermique supplémentaire (31) est agencé dans un circuit de refroidissement (C) comprenant dans le sens de circulation d'un fluide réfrigérant destiné à circuler au sein de ce circuit de refroidissement (C) : un compresseur (60), un condenseur (70), un premier détendeur (81) et un premier évaporateur (91), l'échangeur thermique supplémentaire (31) étant disposé dans ledit circuit de refroidissement (C) en aval du compresseur (60) et en amont du condenseur (70).

3. Module de refroidissement (22) selon la revendication précédente, **caractérisé en ce que** le premier évaporateur (91) du circuit de refroidissement (C) est une interface de gestion thermique configurée pour échanger de la chaleur avec les batteries du véhicule automobile (10).

4. Module de refroidissement (22) selon l'une quelconque des revendications 2 ou 3, **caractérisé en ce que** le circuit de refroidissement (C) comporte un deuxième détendeur (82) et un deuxième évaporateur (92) disposés en parallèle du premier détendeur (81) et du premier évaporateur (91), et **en ce que** le deuxième évaporateur (92) est destiné à être traversé par un flux d'air interne.

5. Module de refroidissement (22) selon l'une quelconque des revendications précédentes, **caractérisé en ce que** l'échangeur thermique supplémentaire (31) présente une forme parallélépipédique comportant une longueur (L1), une hauteur (H) et une largeur (L2) et **en ce que** la longueur (L1) de l'échangeur thermique supplémentaire (31) est inférieure ou égale à la largeur du module de refroidissement (22).

6. Module de refroidissement (22) selon l'une quelconque des revendications précédentes, **caractérisé en ce qu'**il comprend au moins une paroi additionnelle (50) reliant un bord (55) de l'ouverture d'évacuation (22b) à un flanc de l'échangeur thermique supplémentaire (31).

7. Module de refroidissement (22) selon la revendication précédente, **caractérisé en ce que** la paroi additionnelle (50) est une pièce annexée au bord (55) de l'ouverture d'évacuation (22b).

8. Module de refroidissement (22), selon l'une quelconque des revendications 6 à 7, **caractérisé en ce que** l'échangeur thermique supplémentaire (31) présente une forme parallélépipédique comportant une longueur (L1), une hauteur (H) et une largeur (L2) et **en ce que** la largeur (L2) de l'échangeur thermique supplémentaire (31) est inférieure ou égale à un écartement (e1) entre la paroi additionnelle (50) et un bord inférieur (27) du module de refroidissement (22).

9. Module de refroidissement (22) selon l'une quelconque des revendications précédentes, caractérisé en ce l'échangeur thermique supplémentaire (31) est placé selon un plan général parallèle à la direction longitudinale (X) du module de refroidissement (22).

10. Module de refroidissement (22), selon la revendication précédente, **caractérisé en ce que** l'échangeur thermique supplémentaire (31) est placé selon un plan général parallèle au plan de l'ouverture d'évacuation (22b).

## Patentansprüche

1. Kühlmodul (22) für ein Kraftfahrzeug (10) mit Elektro- oder Hybridmotor (12), umfassend:
- mindestens einen Wärmetauscher (24, 26, 28)
- mindestens eine Tangentialflussturbomaschine (30), die eine Rotationsachse (A) aufweist, wobei die Tangentialflussturbomaschine (30) geeignet ist, einen Luftstrom (F) zu erzeugen, der zwischen einer Ansaugöffnung (22a) und einer Auslassöffnung (22b) zirkuliert, wobei er den mindestens einen Wärmetauscher (24, 26, 28) durchströmt;
- mindestens ein Gehäuse (40, 41), das dazu ausgestaltet ist, den mindestens einen Wärmetauscher (24, 26, 28) und die mindestens eine Tangentialflussturbomaschine (30) aufzunehmen,
wobei das Kühlmodul (22) **dadurch gekennzeichnet ist, dass** es einen zusätzlichen Wärmetauscher (31) umfasst, der dazu bestimmt ist, von dem Luftstrom (F) durchströmt zu werden, und außerhalb des mindestens einen Gehäuses (40, 41) angeordnet ist, stromab der Auslassöffnung (22b) des Kühlmoduls (22) entlang einer Längsrichtung (X) des Kühlmoduls (22).

2. Kühlmodul (22) nach dem vorhergehenden Anspruch, **dadurch gekennzeichnet, dass** der zusätzliche Wärmetauscher (31) in einem Kühlkreislauf (C) angeordnet ist, der in der Zirkulationsrichtung eines Kältemittels, das dazu bestimmt ist, in diesem Kühlkreislauf (C) zu zirkulieren, umfasst: einen Verdichter (60), einen Verflüssiger (70), ein erstes Expansionsventil (81) und einen ersten Verdampfer (91), wobei der zusätzliche Wärmetauscher (31) in dem Kühlkreislauf (C) stromab des Verdichters (60) und stromauf des Verflüssigers (70) angeordnet ist.

3. Kühlmodul (22) nach dem vorhergehenden Anspruch, **dadurch gekennzeichnet, dass** der erste Verdampfer (91) des Kühlkreislaufs (C) eine Wärmemanagementschnittstelle ist, die dazu ausgestaltet ist, Wärme mit den Batterien des Kraftfahrzeugs (10) zu tauschen.

4. Kühlmodul (22) nach einem der Ansprüche 2 oder 3, **dadurch gekennzeichnet, dass** der Kühlkreislauf (C) ein zweites Expansionsventil (82) und einen zweiten Verdampfer (92) aufweist, die parallel zu dem ersten Expansionsventil (81) und dem ersten Verdampfer (91) angeordnet sind, und dass der zweite Verdampfer (92) dazu bestimmt ist, von einem Innenluftstrom durchströmt zu werden.

5. Kühlmodul (22) nach einem der vorhergehenden Ansprüche, **dadurch gekennzeichnet, dass** der zusätzliche Wärmetauscher (31) eine parallelepipedische Form aufweist, die eine Länge (L1), eine Höhe (H) und eine Breite (L2) hat, und dass die Länge (L1) des zusätzlichen Wärmetauschers (31) kleiner als oder gleich der Breite des Kühlmoduls (22) ist.

6. Kühlmodul (22) nach einem der vorhergehenden Ansprüche, **dadurch gekennzeichnet, dass** es mindestens eine zusätzliche Wand (50) umfasst, die einen Rand (55) der Auslassöffnung (22b) mit einer Seitenwand des zusätzlichen Wärmetauschers (31) verbindet.

7. Kühlmodul (22) nach dem vorhergehenden Anspruch, **dadurch gekennzeichnet, dass** die zusätzliche Wand (50) ein an den Rand (55) der Auslassöffnung (22b) angefügtes Teil ist.

8. Kühlmodul (22) nach einem der Ansprüche 6 bis 7, **dadurch gekennzeichnet, dass** der zusätzliche Wärmetauscher (31) eine parallelepipedische Form aufweist, die eine Länge (L1), eine Höhe (H) und eine Breite (L2) hat, und dass die Breite (L2) des zusätzlichen Wärmetauschers (31) kleiner als oder gleich einem Abstand (e1) zwischen der zusätzlichen Wand (50) und einem unteren Rand (27) des Kühlmoduls (22) ist.

9. Kühlmodul (22) nach einem der vorhergehenden Ansprüche, **dadurch gekennzeichnet, dass** der zusätzliche Wärmetauscher (31) entlang einer allgemeinen Ebene platziert ist, die parallel zu der Längsrichtung (X) des Kühlmoduls (22) verläuft.

10. Kühlmodul (22) nach dem vorhergehenden Anspruch, **dadurch gekennzeichnet, dass** der zusätzliche Wärmetauscher (31) entlang einer allgemeinen Ebene platziert ist, die parallel zu der Ebene der Auslassöffnung (22b) verläuft.

## Claims

1. Cooling module (22) for a motor vehicle (10) with an electric or hybrid motor (12), comprising:
- at least one heat exchanger (24, 26, 28)
- at least one tangential-flow turbomachine (30) having an axis of rotation (A), the tangential-flow turbomachine (30) being capable of creating an air flow (F) circulating between an intake opening (22a) and a discharge opening (22b), passing through the at least one heat exchanger (24, 26, 28);
- at least one housing (40, 41) configured to house the at least one heat exchanger (24, 26, 28) and said at least one tangential-flow turbomachine (30),
the cooling module (22) being **characterized in that** it comprises an additional heat exchanger (31) through which the air flow (F) is intended to pass, arranged outside the at least one housing (40, 41), downstream of the discharge opening (22b) of the cooling module (22) in a longitudinal direction (X) of the cooling module (22).

2. Cooling module (22) according to the preceding claim, **characterized in that** the additional heat exchanger (31) is arranged in a cooling circuit (C) comprising, in the direction of circulation of a refrigerant intended to circulate within this cooling circuit (C): a compressor (60), a condenser (70), a first expansion valve (81) and a first evaporator (91), the additional heat exchanger (31) being arranged in said cooling circuit (C) downstream of the compressor (60) and upstream of the condenser (70).

3. Cooling module (22) according to the preceding claim, **characterized in that** the first evaporator (91) of the cooling circuit (C) is a thermal management interface configured to exchange heat with the batteries of the motor vehicle (10).

4. Cooling module (22) according to either of Claims 2 and 3, **characterized in that** the cooling circuit (C) comprises a second expansion valve (82) and a second evaporator (92) arranged in parallel with the first expansion valve (81) and the first evaporator (91), and **in that** the second evaporator (92) is intended to have an internal air flow passing through it.

5. Cooling module (22) according to any one of the preceding claims, **characterized in that** the additional heat exchanger (31) has a parallelepiped shape comprising a length (L1), a height (H) and a width (L2) and **in that** the length (L1) of the additional heat exchanger (31) is less than or equal to the width of the cooling module (22) .

6. Cooling module (22) according to any one of the preceding claims, **characterized in that** it comprises at least one additional wall (50) connecting an edge (55) of the discharge opening (22b) to a side of the additional heat exchanger (31).

7. Cooling module (22) according to the preceding claim, **characterized in that** the additional wall (50) is a part attached to the edge (55) of the discharge opening (22b).

8. Cooling module (22) according to either of Claims 6 and 7, **characterized in that** the additional heat exchanger (31) has a parallelepiped shape comprising a length (L1), a height (H) and a width (L2) and **in that** the width (L2) of the additional heat exchanger (31) is less than or equal to a spacing (e1) between the additional wall (50) and a lower edge (27) of the cooling module (22).

9. Cooling module (22) according to any one of the preceding claims, **characterized in that** the additional heat exchanger (31) is positioned in a general plane parallel to the longitudinal direction (X) of the cooling module (22).

10. Cooling module (22) according to the preceding claim, **characterized in that** the additional heat exchanger (31) is positioned in a general plane parallel to the plane of the discharge opening (22b).
